# EUROPEAN PATENT APPLICATION

(11) **EP 4 790 829 A1**
(43) Date of publication of application: **12.08.2026**
(21) Application number: 24887510.6
(22) Date of filing: 06.08.2024
(51) Int. Cl.: H01M 50/627

(54) **END COVER ASSEMBLY, ENERGY STORAGE APPARATUS AND ELECTRICAL DEVICE**

(30) Priority: 08.11.2023 CN 202311478868
(71) Applicant: Shenzhen Hithium Energy Storage Technology Co., Ltd., Shenzhen, Guangdong 518110 (CN); Xiamen Hithium Energy Storage Technology Co., Ltd., Xiamen, Fujian 361000 (CN)
(72) Inventor: LI, Maosong, Xiamen, Fujian 361000 (CN)
(74) Representative: Viering, Jentschura & Partner mbB Patent- und Rechtsanwälte
(86) International application number: PCT/CN2024/110012
(87) International publication number: WO 2025/097888

(57) **Abstract**

An end-cover assembly, an energy storage apparatus, and an electricity-consumption device are provided in the present disclosure. The end-cover assembly includes a top cover and an explosion-proof valve. The top cover defines an explosion-proof hole. The explosion-proof hole includes a recessed-platform portion. A welding ring portion of the explosion-proof valve is mounted at the recessed-platform portion, and is fixedly connected to a hole wall of the recessed-platform portion. The welding ring portion and a connecting ring portion of the explosion-proof valve are both disposed around an explosion-proof-valve body. The connecting ring portion is fixedly connected between the welding ring portion and the explosion-proof-valve body. A score portion of the explosion-proof valve is disposed around a rupture portion. The score portion is rotatable relative to a fixing portion after the score portion is broken. When an internal pressure of the energy storage apparatus is too large, the rupture portion is flipped downward to relieve pressure. By pulling a handle of the explosion-proof valve, the fixing portion can be flipped downward to relieve pressure. Meanwhile, pulling the handle can separate the explosion-proof-valve body from the welding ring portion, the welding ring portion enters a broken state, and the explosion-proof hole is used for electrolyte injection. The end-cover assembly provided in the present disclosure can avoid the explosion-proof valve from failing to burst at a preset pressure threshold, thereby improving the safety performance of the energy storage apparatus.

## Description

### CROSS-REFERENCE TO RELATED APPLICATION(S)

This application claims priority to Chinese Patent Application No. 2023114788688, filed November 08, 2023 to China national intellectual property administration (CNIPA), and entitled "END-COVER ASSEMBLY, ENERGY STORAGE APPARATUS, AND ELECTRICITY-CONSUMPTION DEVICE", the entire disclosure of which is hereby incorporated by reference.

### TECHNICAL FIELD

This disclosure relates to the field of energy storage technology, and in particular, to an end-cover assembly, an energy storage apparatus, and an electricity-consumption device.

### BACKGROUND

A rechargeable battery, also known as a secondary battery or storage battery, refers to a battery that can be recharged to reactivate an active material after discharge, allowing continued use. The recyclable nature of rechargeable batteries has gradually made them the primary power source for electricity-consumption devices. As the demand for rechargeable batteries increases, the performance requirements for these batteries have also risen, particularly regarding high-capacity batteries. The size and weight of the jelly roll of the battery are important parameters to ensure high battery capacity. When the size of the jelly roll is greater and the weight of the jelly roll is heavier, the battery capacity is greater.

However, as the battery capacity increases, more electrolyte needs to be injected. An existing electrolyte-injection-hole structure is generally defined between an explosion-proof valve and a terminal post of a top cover. When the top cover is subjected to pressure from the inside of the battery, the top cover will expand and deform outward at a position of the electrolyte injection hole, thus destroying an original mechanical structure of the top cover. As a result, the explosion-proof valve fails to burst accurately at a preset pressure threshold, so that it is impossible to guarantee the safety performance of the battery.

### SUMMARY

The present disclosure provides an end-cover assembly, an energy storage apparatus, and an electricity-consumption device, so that an explosion-proof valve can be prevented from failing to burst at a preset pressure threshold, thereby improving the safety performance of the energy storage apparatus.

In a first aspect, the present disclosure provides an end-cover assembly for sealing a housing of an energy storage apparatus. The end-cover assembly includes a top cover and an explosion-proof valve. The top cover defines an explosion-proof hole. The top cover has a top surface configured to be positioned facing away from the housing. The explosion-proof hole includes a body portion and a recessed-platform portion. The recessed-platform portion extends through the top surface. The body portion is positioned at one side of the recessed-platform portion positioned facing away from the top surface and is in communication with the recessed-platform portion. A hole wall surface of the recessed-platform portion is disposed around and spaced apart from a hole wall surface of the body portion. The explosion-proof valve includes an explosion-proof-valve body, a welding ring portion, a connecting ring portion, and a handle. The welding ring portion and the connecting ring portion are both disposed around the explosion-proof-valve body. The connecting ring portion is fixedly connected between the welding ring portion and the explosion-proof-valve body. The welding ring portion is mounted at the recessed-platform portion and is fixedly connected to the hole wall surface of the recessed-platform portion. The explosion-proof-valve body includes a fixing portion, a rupture portion, and a score portion. The fixing portion defines a gas release hole. The gas release hole extends through the fixing portion in a thickness direction of the explosion-proof valve and is opposite to the explosion-proof hole in the thickness direction of the fixing portion. The rupture portion is disposed in the gas release hole. The rupture portion is fixedly connected to the fixing portion and rotatable relative to the fixing portion in the thickness direction of the fixing portion. The score portion is disposed around the rupture portion and is fixedly connected between the rupture portion and a hole wall of the gas release hole. A thickness of the score portion is less than a thickness of the connecting ring portion. The handle includes a mounting portion, a press-down portion, and a lifting portion. The fixing portion is provided with a protruding post on an upper surface of the fixing portion. The mounting portion is mounted to the protruding post. The press-down portion is fixedly connected to the mounting portion and rotatable relative to the mounting portion in the thickness direction of the explosion-proof valve. The lifting portion is fixedly connected to one end of the mounting portion and is configured to drive the press-down portion to rotate relative to the mounting portion in the thickness direction of the explosion-proof valve.

In a second aspect, the present disclosure provides an energy storage apparatus. The energy storage apparatus includes a housing, an electrode assembly, an electrolyte, and the end-cover assembly in the first aspect. The housing has an opening and defines an accommodating cavity therein. The electrolyte and the electrode assembly are both positioned in the accommodating cavity. The electrode assembly is immersed in the electrolyte. The end-cover assembly is mounted on the housing and covers the opening.

In a third aspect, the present disclosure provides an electricity-consumption device. The electricity-consumption device includes the energy storage apparatus in the second aspect. The energy storage apparatus is configured to supply power to the electricity-consumption device.

In summary, with the end-cover assembly provided in the present disclosure, prior to mounting of the explosion-proof valve, the electrolyte can be injected into the housing through the explosion-proof hole, thereby realizing the filling of the electrolyte. Compared with the separately designed electrolyte injection hole in the related art, the explosion-proof hole is greater in size, and the electrolyte can be injected through the explosion-proof hole at a faster speed, thereby improving the electrolyte injection efficiency. Meanwhile, the electrolyte injection region is enlarged and the immersion effect of the electrode core is improved. After the electrolyte injection is completed, the explosion-proof valve is mounted on the top cover to seal the explosion-proof hole, thereby realizing the sealing of the interior of the energy storage apparatus. The end-cover assembly provided in this embodiment eliminates the structure of the electrolyte injection hole and the number of parts such as the sealant nail and the aluminum cover sheet for sealing the electrolyte injection hole, thereby simplifying the structures of the end-cover assembly and the energy storage apparatus, and further reducing the assembly procedures, thus lowering the production cost. Moreover, in this embodiment, the electrolyte is directly injected through the explosion-proof hole, and there is no need to separately define an electrolyte injection hole on the top cover (or other positions of the energy storage apparatus), so that deformation of the top cover caused by outward expansion under internal pressure of the energy storage apparatus due to the presence of the electrolyte injection hole can be avoided. Therefore, even when subjected to pressure generated inside the energy storage apparatus, the top cover in the present disclosure can maintain the original mechanical structure thereof, thereby ensuring that the explosion-proof valve can burst at the preset pressure threshold and improving the safety performance of the energy storage apparatus.

In this embodiment, by providing the score portion on the explosion-proof-valve body, when the internal pressure of the energy storage apparatus becomes excessive, the score portion can be broken, the fixing portion can be flipped upward, and the high-pressure gas can be released through the explosion-proof hole and the gas release hole, thereby realizing pressure relief and avoiding the explosion of the energy storage apparatus caused by excessive internal pressure.

In addition, in this embodiment, by providing the connecting ring portion, the explosion-proof-valve body can be pulled away from the top cover as a whole, so that the electrolyte can be supplemented and injected into the energy storage apparatus through the explosion-proof hole, enabling the energy storage apparatus to restore its energy storage effect and thus improving the service life of the energy storage apparatus. The electrolyte is injected into the energy storage apparatus through the explosion-proof hole, so that the area for electrolyte filling can be increased, the injection speed of the electrolyte can be improved, and the external foreign matter can be prevented from contaminating the internal environment of the energy storage apparatus, thereby further improving the service life of the energy storage apparatus.

In addition, before the explosion-proof-valve body is pulled away from the top cover as a whole, the score portion is first broken to release the pressure inside the energy storage apparatus through the explosion-proof hole and the gas release hole, thereby realizing pressure relief and avoiding the inability to inject the electrolyte due to excessive pressure inside the energy storage apparatus.

### BRIEF DESCRIPTION OF THE DRAWINGS

To more clearly illustrate the technical solutions of the present disclosure, the following briefly introduces accompanying drawings that need to be used in implementations. Obviously, the accompanying drawings in the following description are only some implementations of the present disclosure. For those of ordinary skill in the art, without any creative effort, other accompanying drawings can be obtained from these accompanying drawings.
FIG. 1 is an application scenario view of an energy storage apparatus provided in embodiments of the present disclosure.
FIG. 2 is a schematic structural view of an energy storage apparatus provided in the present disclosure.
FIG. 3 is an exploded schematic structural view of the energy storage apparatus illustrated in FIG. 2.
FIG. 4 is a schematic structural view of an end-cover assembly of the energy storage apparatus illustrated in FIG. 2.
FIG. 5 is an exploded schematic structural view of the end-cover assembly illustrated in FIG. 4.
FIG. 6 is a schematic structural view of the explosion-proof valve of the end-cover assembly illustrated in FIG. 5.
FIG. 7 is a partial schematic structural view of the explosion-proof valve illustrated in FIG. 6.
FIG. 8 is a schematic structural view of a handle of the explosion-proof valve illustrated in FIG. 6.
FIG. 9 is a schematic cross-sectional structural view of the end-cover assembly of the energy storage apparatus illustrated in FIG. 4, taken in direction A-A.
FIG. 10 is a partial schematic structural view of the end-cover assembly illustrated in FIG. 4 when the end-cover assembly is in a second state.
FIG. 11 is a partial schematic structural view of the end-cover assembly illustrated in FIG. 4 when the end-cover assembly is in a third state.
FIG. 12 is a partial schematic structural view of the end-cover assembly illustrated in FIG. 4 when the end-cover assembly is in a fourth state.

The reference numerals in the accompanying drawings correspond to the following terms:
5000 - energy storage system, 4000 - wind energy conversion apparatus, 4500 - electrical energy conversion apparatus, 3500 - energy storage cabinet, 3000 - first user-load, 1000 - energy storage apparatus, 200 - housing, 210 - accommodating cavity, 300 - electrode assembly, 310 - electrode core, 100 - end-cover assembly, 10 - top cover, 20 - lower plastic member, 30 - explosion-proof valve, 3 - explosion-proof member, 51 - first terminal-post, 52 - second terminal-post, 61 - first upper plastic member, 62 - second upper plastic member, 101 - top surface, 102 - bottom surface, 11 - first terminal-post through-hole, 12 - second terminal-post through-hole, 13 - explosion-proof hole, 131 - body portion, 14 - recessed-platform portion, 15 - liquid-collecting groove, 21 - lower-plastic-member body, 211 - first surface, 212 - second surface, 213 - first side-surface, 214 - second side-surface, 215 - first through-hole, 216 - second through-hole, 217 - first vent hole, 218 - second vent hole, 219 - vent hole, 22 - protruding portion, 23 - first protruding sub-portion, 24 - second protruding sub-portion, 40 - explosion-proof-valve body, 401 - upper surface, 402 - lower surface, 403 - gas release hole, 41 - fixing portion, 42 - rupture portion, 43 - score portion, 46 - reinforced connection portion, 431 - first segment, 432 - second segment, 433 - third segment, 434 - first end, 435 - second end, 31 - welding ring portion, 33 - connecting ring portion, 1 - notch, 421 - first reinforcing rib, 44 - protruding post, 441 - mounting segment, 442 - limiting segment, 45 - second reinforcing rib, 451 - reinforcing part, 452 - enclosing part, 32 - handle, 321 - mounting portion, 322 - connecting portion, 323 - press-down portion, 324 - lifting portion, 325 - mounting hole.

### DETAILED DESCRIPTION

The following will describe technical solutions of embodiments of the present disclosure clearly and completely with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, in order to achieve the purpose of carbon neutralization, the main way to generate green electrical energy at present is to develop green energy such as photovoltaic and wind power to replace fossil energy. At present, generation of green electrical energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage will cause loss of the power. Therefore, "curtailment of wind and photovoltaics" may occur due to insufficient power demand or insufficient power-grid admitting ability, and energy storage is required to solve these problems. That is, electrical energy is stored by converting it into other forms of energy by physical or chemical means, and energy is released by converting it into electrical energy when needed. In brief, energy storage is similar to a large "power bank", which stores electrical energy when photovoltaics and wind energy are sufficient and releases stored electric power when needed.

Taking electrochemical energy storage as an example, an energy storage apparatus 1000 is provided in the present disclosure. The energy storage apparatus 1000 includes one group of chemical batteries. Chemical elements in the chemical batteries can be used as an energy storage medium to implement a charging/discharging process through chemical reaction or change of the energy storage medium. In brief, electrical energy generated by solar energy and wind energy is stored in the chemical batteries. When the usage of external electrical energy reaches a peak, the power stored in the chemical batteries is released for use, or is transferred to a place where the power is scarce for reuse.

At present, energy storage may be applied in various application scenarios, including (wind/solar) power-generation-side energy storage, grid-side energy storage, base-station-side energy storage, user-side energy storage, etc. Corresponding types of energy storage apparatuses 1000 include the following.
(1) A large-sized energy storage container applied in a grid-side energy-storage scenario. The energy storage container may serve as a high-quality active and reactive regulation power source in the grid, which can realize matching of electrical energy loads in time and space, enhance the capacity for integration of renewable energy, and is of great significance in the backup of the grid system, relieving the pressure of power supply at a peak load, and peak shaving and frequency modulation.
(2) A small and medium-sized energy storage cabinet applied in a user-side industrial and commercial energy-storage scenario (banks, shopping malls, etc.). The small and medium-sized energy storage cabinet mainly operates in a "peak shaving and valley filling" mode. Based on the demand for electricity, there may be a significant price difference in electricity prices at peak and valley periods. When the user has an energy storage device, in order to reduce cost, an energy storage cabinet/box may be usually charged during an electricity-price valley period, and the electricity in the energy storage device may be usually released for use during the electricity-price peak period to save electricity cost.

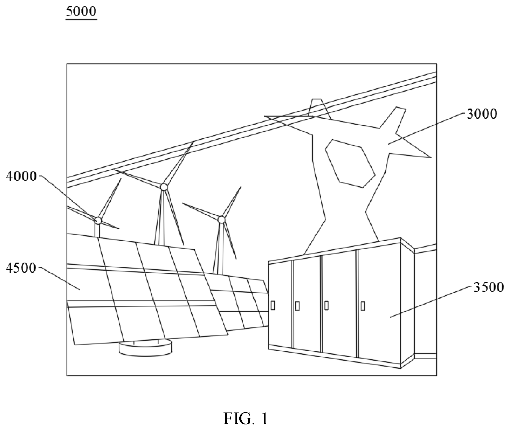

Reference can be made to FIG. 1, where FIG. 1 is an application scenario view of an energy storage apparatus 1000 provided in embodiments of the present disclosure. The embodiments of the present disclosure take the household energy storage scenario in user-side energy storage as an example for illustration, but the energy storage apparatus 1000 of the present disclosure is not limited to the household energy storage scenario.

The present disclosure provides a household energy storage system 5000. The household energy storage system 5000 includes an electrical energy conversion apparatus 4500 (photovoltaic panel), a wind energy conversion apparatus 4000 (windmill), a first user-load 3000 (base station), a second user-load (not shown) (industrial and commercial side), etc., as well as an energy storage apparatus 1000. The energy storage system 5000 further includes an energy storage cabinet 3500. The energy storage apparatus 1000 is mounted in the energy storage cabinet 3500 for easy outdoor mounting. Specifically, the electrical energy conversion apparatus 4500 can convert solar energy into electrical energy during the electricity-price valley period. The energy storage apparatus 1000 is configured to store the electrical energy and provide the electrical energy to the base station and the industrial and commercial side during the electricity-price peak period, or supply electricity when there is an outage/blackout in the power grid. The wind energy conversion apparatus 4000 (windmill) can convert wind energy into electrical energy. The energy storage apparatus 1000 is configured to store the electrical energy and provide the electrical energy to the base station and the industrial and commercial side during the electricity-price peak period, or to supply electricity when there is an outage/blackout in the power grid. The electrical energy may be transmitted using a high voltage cable.

It can be understood that the energy storage apparatus 1000 may include, but is not limited to, single batteries, battery modules, battery packs, battery systems, etc. The actual application forms of the energy storage apparatus 1000 provided in the embodiments of the present disclosure may be, but are not limited to, the listed products, and may also be other application forms. The embodiments of the present disclosure do not strictly limit the application form of the energy storage apparatus 1000. There may be several energy storage apparatuses 1000. The several energy storage apparatuses 1000 are connected in series or parallel with each other. The several energy storage apparatuses 1000 are supported and electrically connected by isolation plates (not shown). In this embodiment, "several" refers to two or more.

The embodiments of the present disclosure only take the energy storage apparatus 1000 as a multi-cell battery as an example for illustration.

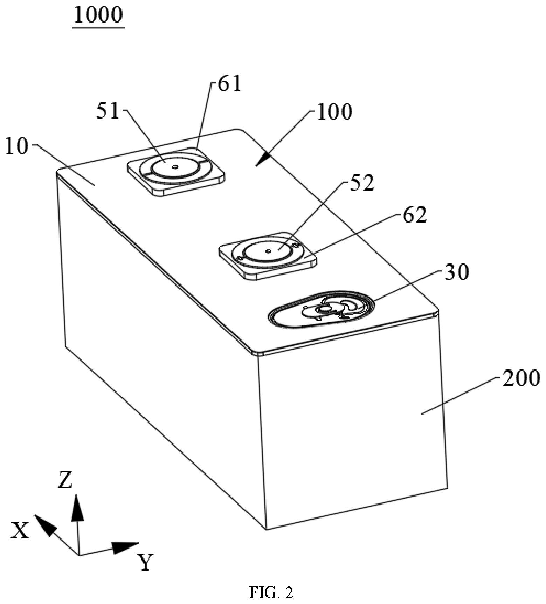

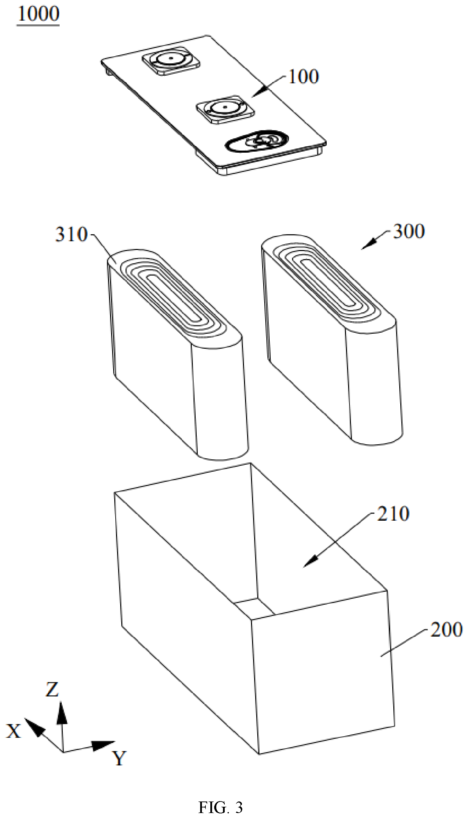

Reference can be made to FIG. 2 and FIG. 3, where FIG. 2 is a schematic structural view of an energy storage apparatus 1000 provided in the present disclosure, and FIG. 3 is an exploded schematic structural view of the energy storage apparatus 1000 illustrated in FIG. 2.

For the convenience of description, a length direction of the energy storage apparatus 1000 illustrated in FIG. 2 is defined as an X-axis direction, a width direction of the energy storage apparatus 1000 is defined as a Y-axis direction, and a thickness direction of the end-cover assembly 100 is defined as a Z-axis direction. The X-axis direction, the Y-axis direction, and the Z-axis direction are perpendicular to each other pairwise. The orientation terms such as "top", "bottom", "upper", and "lower" mentioned in the description of the embodiments of the present disclosure are described based on the orientation illustrated in FIG. 2 of the accompanying drawings of the specification. A direction towards a positive direction of the Z-axis is defined as "upper" or "top", and a direction towards a negative direction of the Z-axis is defined as "lower" or "bottom", which do not limit the energy storage apparatus 1000 in the actual application scenario. The terms "same", "equal", or "parallel" used hereinafter are all intended to allow for certain tolerances.

The energy storage apparatus 1000 includes a housing 200, an end-cover assembly 100, an electrode assembly 300, and an electrolyte. The housing 200 defines an accommodating cavity 210 therein. An opening of the accommodating cavity 210 is positioned at one side of the housing 200 in the height direction of the housing 200. The electrode assembly 300 and the electrolyte are positioned in the accommodating cavity 210. The electrode assembly 300 is immersed in the electrolyte. The end-cover assembly 100 is mounted to the opening of the housing 200 and is fixedly connected to the housing 200, so as to seal the accommodating cavity 210.

The electrode assembly 300 includes an electrode core 310. The electrode core 310 includes a positive tab (not shown) and a negative tab (not shown). The positive tab is connected to a positive terminal post of the end-cover assembly 100, and the negative tab is connected to a negative terminal post of the end-cover assembly 100. In this embodiment, there are two electrode cores 310. In the width direction (Y-axis direction) of the energy storage apparatus 1000, the two electrode cores 310 are arranged side by side. In the width direction (Y-axis direction) of the energy storage apparatus 1000, the positive tabs of the two electrode cores 310 are arranged opposite to each other, and the negative tabs of the two electrode cores 310 are arranged opposite to each other. The positive tabs of the two electrode cores 310 are both connected to the positive terminal post, and the negative tabs of the two electrode cores 310 are both connected to the negative terminal post. In some other embodiments, the number of electrode cores 310 may also be one, three, or more than four. The number of electrode cores 310 is not specifically limited here.

In this embodiment, the outer side of the electrode assembly 300 is further coated with an insulating film (not shown) to protect the electrode core 310 and prevent the electrode core 310 from being scratched. The insulating film covers an outer surface of the electrode assembly 300, and a side edge of the insulating film is thermally bonded to the end-cover assembly 100.

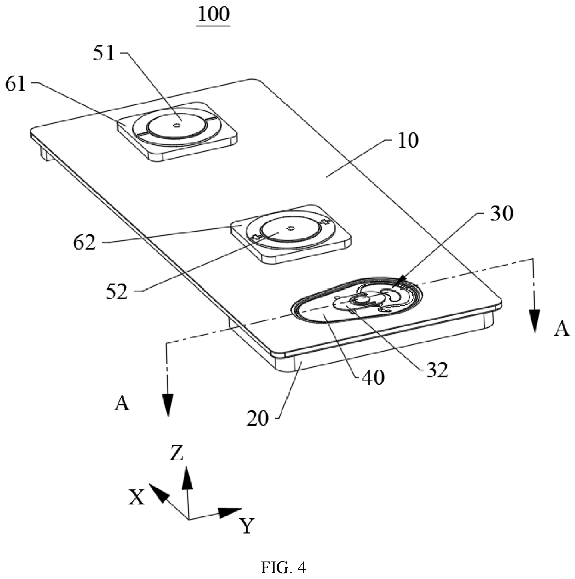

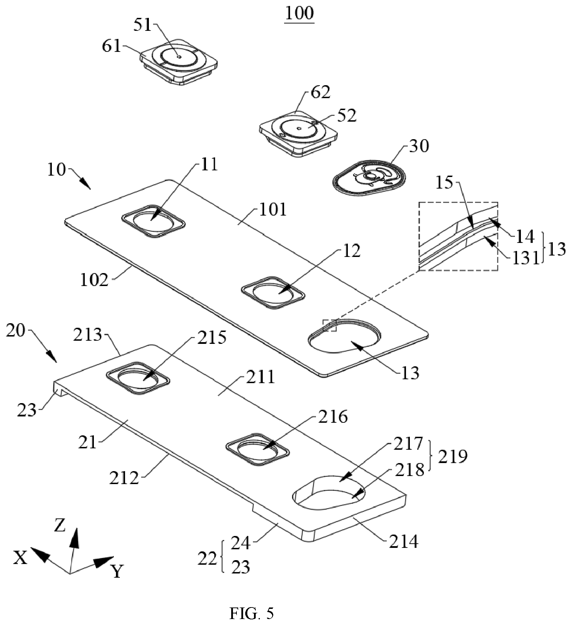

Reference can be made to FIG. 4 and FIG. 5, where FIG. 4 is a schematic structural view of an end-cover assembly 100 of the energy storage apparatus 1000 illustrated in FIG. 2, and FIG. 5 is an exploded schematic structural view of the end-cover assembly 100 illustrated in FIG. 4.

The end-cover assembly 100 includes a top cover 10, a lower plastic member 20, and an explosion-proof valve 30. The explosion-proof valve 30 is mounted inside the top cover 10. The lower plastic member 20 is mounted at one side of the top cover 10, and the lower plastic member 20 is positioned between the electrode assembly 300 and the top cover 10. In this embodiment, the top cover 10 is made of a smooth aluminum member. The lower plastic member 20 is made of plastic and is insulated. The end-cover assembly 100 further includes a first terminal-post 51, a second terminal-post 52, a first upper plastic member 61, and a second upper plastic member 62. The first upper plastic member 61 is sleeved on the outer periphery of the first terminal-post 51 and is fixedly connected to the top cover 10. The first terminal-post 51 is insulated from the top cover 10 through the first upper plastic member 61. The second upper plastic member 62 is sleeved on the outer periphery of the second terminal-post 52 and is fixedly connected to the top cover 10. The second terminal-post 52 is insulated from the top cover 10 through the second upper plastic member 62. In this embodiment, the first terminal-post 51 is a positive terminal-post, and the second terminal-post 52 is a negative terminal-post. In other embodiments, the first terminal-post 51 may be a negative terminal-post, and the second terminal-post 52 may be a positive terminal-post.

The top cover 10 is a rectangular thin plate. The top cover 10 has a top surface 101 and a bottom surface 102. The top surface 101 and the bottom surface 102 are positioned facing away from each other and are respectively positioned at opposite sides of the top cover 10 in the thickness direction (Z direction). The top cover 10 defines a first terminal-post through-hole 11, a second terminal-post through-hole 12, and an explosion-proof hole 13. In the X-axis direction, that is, in the length direction of the top cover 10, the first terminal-post through-hole 11, the second terminal-post through-hole 12, and the explosion-proof hole 13 are arranged at intervals in sequence. The explosion-proof hole 13 is located in an edge region of the top cover 10. The explosion-proof hole 13 includes a body portion 131 and a recessed-platform portion 14. The recessed-platform portion 14 extends through the top surface 101. The body portion 131 is positioned at one side of the recessed-platform portion 14 positioned facing away from the top surface 101 and is in communication with the recessed-platform portion 14. A hole wall surface of the recessed-platform portion 14 is disposed around and spaced apart from a hole wall surface of the body portion 131. The explosion-proof hole 13 is configured for mounting of the explosion-proof valve 30. A groove wall of the recessed-platform portion 14 is configured for fixed connection with the explosion-proof valve 30.

The lower plastic member 20 includes a lower-plastic-member body 21 and a protruding portion 22. The lower-plastic-member body 21 is a rectangular thin plate. In addition, the size of the lower-plastic-member body 21 is substantially the same as the size of the top cover 10 or slightly less than the size of the top cover 10. The lower-plastic-member body 21 has a first surface 211, a second surface 212, a first side-surface 213, and a second side-surface 214. The first surface 211 and the second surface 212 are positioned facing away from each other and are respectively positioned at opposite sides of the lower-plastic-member body 21 in the thickness direction (Z direction). The first side-surface 213 and the second side-surface 214 are positioned facing away from each other and are respectively positioned at opposite sides of the lower-plastic-member body 21 in the length direction (X direction). The lower-plastic-member body 21 defines a first through-hole 215, a second through-hole 216, and a first vent hole 217. In the negative direction of the X-axis, that is, in a direction from the first side-surface 213 to the second side-surface 214, the first through-hole 215, the second through-hole 216, and the first vent hole 217 are arranged at intervals in sequence. It can be understood that the first through-hole 215 is positioned between the second through-hole 216 and the first side-surface 213, and the first vent hole 217 is positioned between the second side-surface 214 and the second through-hole 216. The first through-hole 215 is opposite to the first terminal-post through-hole 11. The size of the first through-hole 215 is substantially the same as the size of the first terminal-post through-hole 11. The second through-hole 216 is opposite to the second terminal-post through-hole 12. The size of the second through-hole 216 is substantially the same as the size of the second terminal-post through-hole 12. The first vent hole 217 is opposite to the explosion-proof hole 13. The size of the first vent hole 217 is substantially the same as the size of the explosion-proof hole 13.

The protruding portion 22 defines a second vent hole 218. The size of the second vent hole 218 is the same as the size of the first vent hole 217. The protruding portion 22 is fixed to the second surface 212. The second vent hole 218 is opposite to the first vent hole 217 and is in communication with the first vent hole 217. Meanwhile, the first through-hole 215 and the second through-hole 216 remain exposed outside the protruding portion 22. In this embodiment, the protruding portion 22 includes two protruding sub-portions. The two protruding sub-portions are a first protruding sub-portion 23 and a second protruding sub-portion 24 respectively. The first protruding sub-portion 23 is elongated. The length dimension of the first protruding sub-portion 23 is the same as the width dimension of the lower-plastic-member body 21. The first protruding sub-portion 23 is fixed to the second surface 212. The first protruding sub-portion 23 is positioned between the first side-surface 213 and the first through-hole 215 and is spaced apart from the first through-hole 215. The length direction of the first protruding sub-portion 23 is parallel to the width direction of the lower-plastic-member body 21. The second protruding sub-portion 24 has a rectangular plate-shaped structure. The second vent hole 218 is defined in the second protruding sub-portion 24 and extends through the second protruding sub-portion 24 in the thickness direction. The second protruding sub-portion 24 is fixed to the second surface 212. The second protruding sub-portion 24 is positioned between the second side-surface 214 and the second through-hole 216 and is spaced apart from the second through-hole 216. The second vent hole 218 and the first vent hole 217 are opposite to each other and are in communication with each other, thereby together forming a vent hole 219. In this embodiment, the lower plastic member 20 is an integrally molded part. Exemplarily, the lower plastic member 20 is made by injection molding.

The lower plastic member 20 is fixedly connected to the top cover 10. The first surface 211 of the lower plastic member 20 is positioned facing towards and fixedly connected to the bottom surface 102 of the top cover 10. The first through-hole 215 is opposite to and in communication with the first terminal-post through-hole 11. The second through-hole 216 is opposite to and in communication with the second terminal-post through-hole 12. The explosion-proof hole 13 is opposite to and in communication with the vent hole 219. One end of the first terminal-post 51 is electrically connected to the positive tab, and the other end of the first terminal-post 51 passes through the first through-hole 215 and the first terminal-post through-hole 11. The first upper plastic member 61 is sleeved on the outer periphery of the first terminal-post 51, passes through the first through-hole 215 and the first terminal-post through-hole 11, and is fixedly connected to the top cover 10. The first upper plastic member 61 is positioned between the positive terminal-post and the top cover 10, which can fix the first terminal-post 51 and insulate the first terminal-post 51 from the top cover 10. One end of the second terminal-post 52 is electrically connected to the negative tab, and the other end of the second terminal-post 52 passes through the second through-hole 216 and the second terminal-post through-hole 12. The second upper plastic member 62 is sleeved on the outer periphery of the second terminal-post 52, passes through the second through-hole 216 and the second terminal-post through-hole 12, and is fixedly connected to the top cover 10. The second upper plastic member 62 is positioned between the second terminal-post 52 and the top cover 10, which can fix the second terminal-post 52 and insulate the second terminal-post 52 from the top cover 10.

The explosion-proof valve 30 is mounted in the explosion-proof hole 13 and is fixedly connected to the top cover 10. When the internal pressure of the energy storage apparatus 1000 is too high, the explosion-proof valve 30 will automatically open to release pressure to prevent explosion. Before the explosion-proof valve 30 is mounted, the electrolyte can be injected into the housing 200 through the explosion-proof hole 13 and the vent hole 219, thereby realizing the filling of the electrolyte. Compared with the separately designed electrolyte injection hole in the related art, the explosion-proof hole 13 is greater in size, and the electrolyte can be injected through the explosion-proof hole 13 at a faster speed, thereby improving the electrolyte injection efficiency. Meanwhile, the electrolyte injection region is enlarged and the immersion effect of the electrode core 310 is improved. After the injection is completed, the explosion-proof valve 30 is mounted on the top cover 10 to seal the explosion-proof hole 13, thus realizing the sealing of the inside of the energy storage apparatus 1000. The end-cover assembly 100 provided in this embodiment eliminates the structure of the electrolyte injection hole and reduces the number of parts such as the sealant nail and the aluminum cover sheet for sealing the electrolyte injection hole, thereby simplifying the structures of the end-cover assembly 100 and the energy storage apparatus 1000, and further reducing the assembly procedures, thus lowering the production cost.

Moreover, in this embodiment, the electrolyte is directly injected through the explosion-proof hole 13, and there is no need to separately define an electrolyte injection hole on the top cover 10 (or other positions of the energy storage apparatus 1000), so that deformation of the top cover 10 caused by outward expansion under internal pressure of the energy storage apparatus 1000 due to the presence of the electrolyte injection hole can be avoided. Therefore, even when subjected to the pressure generated inside the energy storage apparatus 1000, the top cover 10 in the present disclosure can maintain the original mechanical structure thereof, thereby ensuring that the explosion-proof valve 30 can burst at the preset pressure threshold and improving the safety performance of the energy storage apparatus 1000.

In this embodiment, by providing the protruding portion 22 and the vent hole 219 on the lower plastic member 20, there is a certain gap between the top cover 10 and the electrode core 310, thereby enhancing the gas-accumulation effect of the explosion-proof valve 30. In addition, the high-pressure gas inside the energy storage apparatus 1000 can come into contact with the explosion-proof valve 30 through the vent hole 219 and exert a force on the explosion-proof valve 30, so that the explosion-proof valve 30 ruptures at the preset pressure threshold, thereby improving the safety performance of the energy storage apparatus 1000.

It may be noted that after multiple energy storage apparatuses 1000 are arranged to form a battery module, a wiring harness isolation plate of the battery module is generally mounted in the middle of the battery module. In this embodiment, by disposing the explosion-proof valve 30 at a position of the top cover 10 closer to the side edge of the top cover 10, that is, by disposing the explosion-proof valve 30 in the edge region of the top cover 10, the explosion-proof valves 30 of the multiple energy storage apparatuses 1000 in the battery module are positioned at the same side. Therefore, it is convenient for an operator to inject the electrolyte from one side of the battery module without the need to disassemble the wiring harness isolation plate, thereby simplifying the manufacturing process of the battery module.

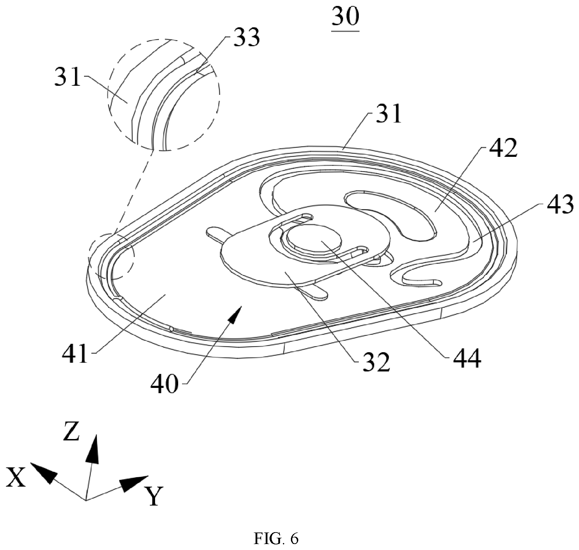

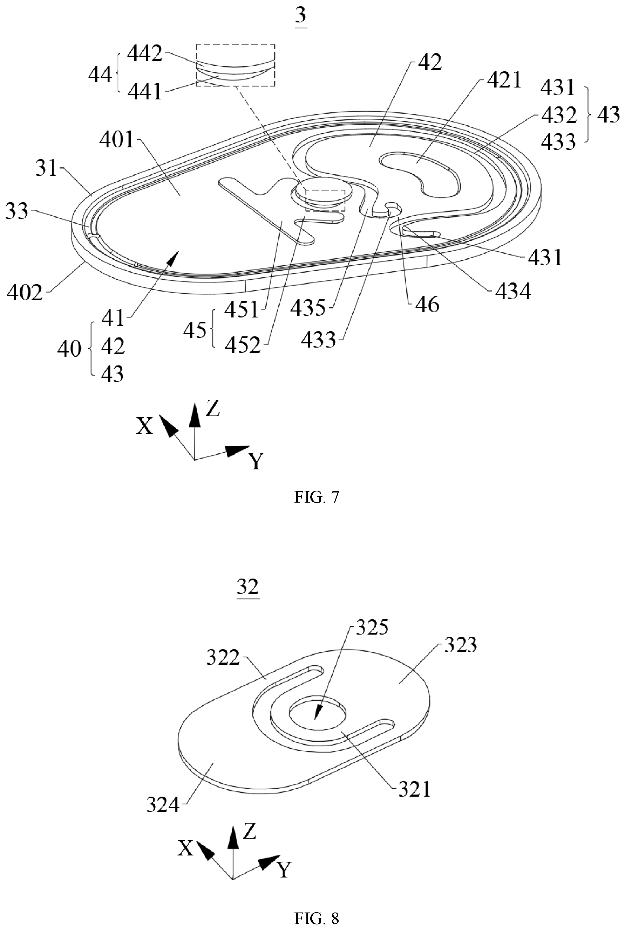

Reference can be made to FIG. 6 and FIG. 7, where FIG. 6 is a schematic structural view of the explosion-proof valve 30 of the end-cover assembly 100 illustrated in FIG. 5, and FIG. 7 is a partial schematic structural view of the explosion-proof valve 30 illustrated in FIG. 6.

The explosion-proof valve 30 includes an explosion-proof member 3 and a handle 32. The explosion-proof member 3 includes an explosion-proof-valve body 40, a welding ring portion 31, and a connecting ring portion 33. The welding ring portion 31 is mounted on the top cover 10 and fixedly connected to a hole wall of the explosion-proof hole 13. Both the welding ring portion 31 and the connecting ring portion 33 are disposed around the explosion-proof-valve body 40. The connecting ring portion 33 is fixedly connected between the welding ring portion 31 and the explosion-proof-valve body 40. The explosion-proof-valve body 40, the connecting ring portion 33, and the welding ring portion 31 jointly cover the explosion-proof hole 13. The handle 32 is connected to the explosion-proof-valve body 40.

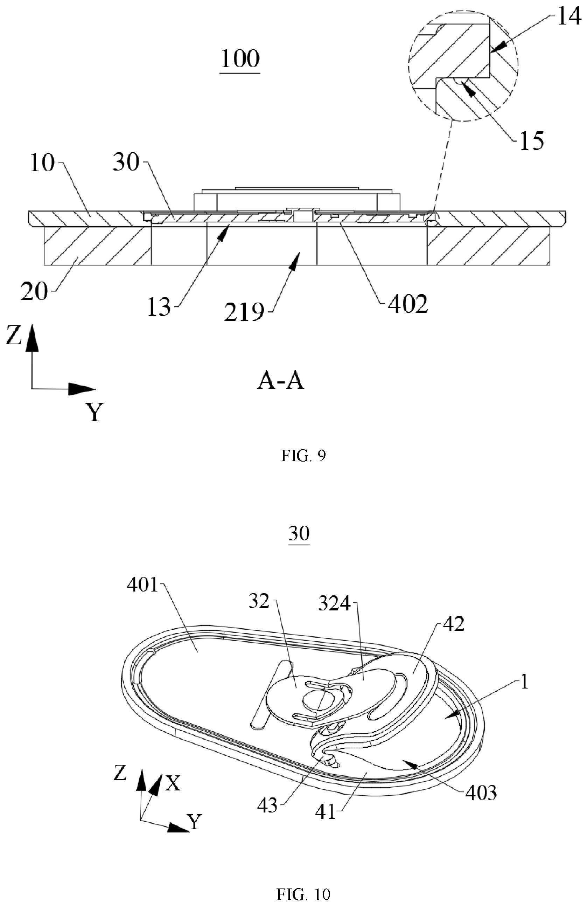

The explosion-proof-valve body 40 is in the shape of a thin sheet. The explosion-proof-valve body 40 has an upper surface 401 and a lower surface 402. The upper surface 401 and the lower surface 402 are positioned facing away from each other and are respectively positioned at the opposite sides of the explosion-proof-valve body 40 in the thickness direction (Z direction). The explosion-proof-valve body 40 includes a fixing portion 41, a rupture portion 42, a score portion 43, and a reinforced connection portion 46. The fixing portion 41 has an outer peripheral surface. The fixing portion 41 defines a gas release hole 403 (as illustrated in FIG. 10). The gas release hole 403 extends through the fixing portion 41 in the thickness direction of the explosion-proof-valve body 40. That is, the gas release hole 403 extends through the upper surface 401 and the lower surface 402. The rupture portion 42 is disposed in the gas release hole 403 and is spaced apart from the fixing portion 41. The score portion 43 is connected between the rupture portion 42 and the hole wall of the gas release hole 403. The reinforced connection portion 46 is connected between the opposite ends of the score portion 43. The reinforced connection portion 46 and the score portion 43 jointly surround the rupture portion 42. In addition, the rupture portion 42 is rotatable relative to the fixing portion 41 in the thickness direction of the fixing portion 41.

In this embodiment, the score portion 43 is in the shape of a "Q". The score portion 43 includes a first segment 431, a second segment 432, and a third segment 433 connected in sequence. The second segment 432 is arc-shaped. The second segment 432 has a first end 434 and a second end 435. The first end 434 and the second end 435 are respectively positioned at the opposite ends of the second segment 432 in an extending direction of the second segment 432. The first end 434 is positioned at an edge part of the fixing portion 41 and is spaced apart from the outer peripheral surface of the fixing portion 41. In a direction from the first end 434 towards the second end 435, part of the second segment 432 extends along the edge part of the fixing portion 41, and part of the second segment 432 extends from the edge part of the fixing portion 41 towards the middle part of the fixing portion 41, and the second end 435 is spaced apart from the first end 434. The first segment 431 is fixedly connected to the first end 434. The third segment 433 is fixedly connected to the second end 435. The first segment 431 and the third segment 433 extend away from each other. The first segment 431 is positioned between the second segment 432 and the outer peripheral surface of the fixing portion 41, and one end of the first segment 431 away from the second segment 432 is spaced apart from the second segment 432 and the outer peripheral surface of the fixing portion 41. The third segment 433 is spaced apart from the first end 434 and the first segment 431.

It may be noted that the score portion 43 is obtained by performing a thinning and scoring process on the explosion-proof-valve body 40. In this embodiment, the score portion 43 is a groove. The opening of the groove is positioned on the upper surface 401. One end of the reinforced connection portion 46 is fixedly connected to one end of the first segment 431 positioned facing away from the second segment 432, and the other end of the reinforced connection portion 46 is fixedly connected to one end of the third segment 433 positioned facing away from the second segment 432. In other words, the score portion 43 and the reinforced connection portion 46 jointly form an annular structure. The strength of the reinforced connection portion 46 is greater than the strength of the score portion 43. That is, the thickness of the reinforced connection portion 46 is greater than the thickness of the score portion 43. When the explosion-proof-valve body 40 is subjected to a force acting perpendicular to a surface thereof, the explosion-proof-valve body 40 breaks at the score portion 43, and the reinforced connection portion 46 is fixedly connected between the fixing portion 41 and the rupture portion 42.

In this embodiment, the score portion 43 is the groove. The opening of the groove is positioned on the upper surface 401. The thickness of the groove bottom wall of the groove is less than both the thickness of the fixing portion 41 and the thickness of the rupture portion 42. When the explosion-proof-valve body 40 is subjected to a force acting perpendicular to the surface thereof, the groove bottom wall of the groove breaks, the rupture portion 42 rotates relative to the fixing portion 41, and a notch 1 is defined between the rupture portion 42 and the fixing portion 41. Therefore, the explosion-proof hole 13 is in communication with the gas release hole 403 and in communication with the outside, so as to achieve pressure relief. In other embodiments, the opening of the groove may be positioned on the lower surface 402, or the score portion 43 may be other structures subjected to a weakening connection treatment, as long as the structural strength of the score portion 43 is less than both the structural strength of the fixing portion 41 and the structural strength of the rupture portion 42.

The first segment 431, the second segment 432, and the third segment 433 enclose to define an unclosed region. The rupture portion 42 is positioned in the unclosed region. Part of the rupture portion 42 is fixedly connected to the score portion 43. Part of the rupture portion 42 is connected to the fixing portion 41 through the reinforced connection portion 46. In other words, the score portion 43 is not provided in part of the region between the rupture portion 42 and the fixing portion 41. When the explosion-proof valve 30 ruptures, the pressure inside the energy storage apparatus 1000 partially impacts the explosion-proof valve 30 towards the end-cover assembly 100, so that the score portion 43 breaks, the rupture portion 42 ruptures in the direction away from the top cover 10 to define the notch 1, and thus the gas release hole 403 is in communication with the explosion-proof hole 13 and in communication with the outside. Therefore, the pressure inside the energy storage apparatus 1000 is released through the gas release hole 403 and the explosion-proof hole 13 to the outside, thereby achieving pressure relief and avoiding the explosion of the energy storage apparatus 1000 due to excessive internal pressure. After the rupture portion 42 ruptures, the score portion 43 breaks, and the reinforced connection portion 46 is still fixedly connected between the fixing portion 41 and the rupture portion 42. Therefore, the rupture portion 42 can be prevented from being blown off by the high-pressure gas leaking from the inside of the energy storage apparatus 1000, thereby avoiding the rupture portion 42, after being detached from the energy storage apparatus 1000, from scratching surrounding other battery cells or the electrical elements above the energy storage apparatus 1000. Meanwhile, a short circuit of the battery caused by aluminum sheets in the rupture region, after being detached from the energy storage apparatus 1000, falling into other electrical connection regions, can be prevented, thereby avoiding affecting the safety performance of the battery module.

Reference can continue to be made to FIG. 7. The rupture portion 42 is provided with a first reinforcing rib 421. The first reinforcing rib 421 is spaced apart from the score portion 43. The first reinforcing rib 421 can enhance the structural strength of the rupture portion 42, so that the expansion and deformation of the rupture portion 42 caused by the excessive pressure inside the energy storage apparatus 1000 can be prevented, thereby avoiding failure of the explosion-proof valve 30 to burst and relieve pressure at the preset bursting threshold, and further improving the safety performance of the energy storage apparatus 1000. In this embodiment, the first reinforcing rib 421 is pea-shaped. A bending direction of the first reinforcing rib 421 is substantially parallel to a bending direction of the rupture portion 42, so that the pressure on the rupture portion 42 can be more evenly distributed, thereby enhancing the structural strength of the rupture portion 42. Meanwhile, an outer surface of the pea-shaped first reinforcing rib 421 is a smooth arc shape, thereby avoiding stress concentration and further enhancing the structural strength of the rupture portion 42. In some other embodiments, the first reinforcing rib 421 may also be circular, square, or other shapes.

In this embodiment, the first reinforcing rib 421 is a recess defined on the upper surface 401. An opening of the recess is positioned on the upper surface 401. A bottom wall of the recess protrudes from the lower surface 402. In this embodiment, the recess is defined by stamping. In the actual manufacturing process, stamping is carried out on the upper surface 401 in a direction from the upper surface 401 towards the lower surface 402 to obtain the first reinforcing rib 421. The stamping that is carried out to obtain the first reinforcing rib 421 can simplify the manufacturing process, and can also avoid welding from damaging the metallographic structure of the rupture portion 42 and avoiding affecting the structural strength of the rupture portion 42. In some other embodiments, the first reinforcing rib 421 may be a reinforcing structure welded to the surface of the rupture portion 42.

The fixing portion 41 is provided with a protruding post 44 and a second reinforcing rib 45. The protruding post 44 is disposed on the upper surface 401, and is adjacent to and spaced apart from the rupture portion 42. The protruding post 44 includes a mounting segment 441 and a limiting segment 442. The mounting segment 441 is fixedly connected to the upper surface 401. The limiting segment 442 is fixedly connected to one end of the mounting segment 441 positioned facing away from the upper surface 401. An outer peripheral surface of the limiting segment 442 exceeds an outer peripheral surface of the mounting segment 441. In this embodiment, both the mounting segment 441 and the limiting segment 442 have hollow cylindrical structures. A central axis of the limiting segment 442 coincides with a central axis of the mounting segment 441. The diameter of the limiting segment 442 is greater than the diameter of the mounting segment 441. In other embodiments, the protruding post 44 may be a post of other shapes, as long as the outer peripheral surface of the limiting segment 442 exceeds the outer peripheral surface of the mounting segment 441. The protruding post 44 allows for the handle 32 to be mounted. The handle 32 is sleeved on the outer periphery of the mounting segment 441. The limiting segment 442 plays a limiting role on the handle 32, thereby preventing the handle 32 from separating from the protruding post 44.

In this embodiment, the protruding post 44 is obtained by stamping. In the actual manufacturing process, first, carry out stamping on the lower surface 402 in a direction from the lower surface 402 towards the upper surface 401 to obtain a hollow and non-penetrating rivet post. Then, sleeve the handle 32 on the outer periphery of the rivet post. Next, upset the top surface 101 of the rivet post on one side of the rivet post positioned facing away from the upper surface 401, to make the top surface 101 of the rivet post flat, thereby obtaining the protruding post 44. In addition, fix the handle 32 to the protruding post 44, thereby realizing the rivet-post connection between the handle 32 and the explosion-proof-valve body 40. The handle 32 can rotate around a radial direction of the mounting segment 441 within the mounting segment 441.

In this embodiment, by providing the limiting segment 442, the handle 32 can be limited, thereby preventing the handle 32 from being detached from the protruding post 44 in the height direction of the protruding post 44. Therefore, the connection between the handle 32 and the explosion-proof-valve body 40 can be established, thereby improving the strength and stability of the connection between the handle 32 and the explosion-proof-valve body 40. Meanwhile, in this embodiment, the protruding post 44 is made by stamping, so that the damage to the explosion-proof-valve body 40 can be prevented, the sealing performance of the explosion-proof valve 30 can be ensured. In addition, welding-induced thermal damage to the metallographic structure of the explosion-proof-valve body 40 can also be prevented, so that a decrease in structural strength of the explosion-proof-valve body 40 and an increase in internal stress of the explosion-proof-valve body 40 can be prevented, thereby further improving the structural consistency and structural strength of the explosion-proof valve 30.

The second reinforcing rib 45 protrudes from the upper surface 401. In this embodiment, the second reinforcing rib 45 is in the shape of a "K". The second reinforcing rib 45 includes an enclosing part 452 and a reinforcing part 451. The enclosing part 452 is in the shape of a "V". The reinforcing part 451 is elongated. The enclosing part 452 is connected to the reinforcing part 451. The enclosing part 452 surrounds the outer periphery of the protruding post 44 with a small gap therebetween. The reinforcing part 451 is positioned at one side of the enclosing part 452 positioned facing away from the protruding post 44. The enclosing part 452 of the second reinforcing rib 45 can improve the structural strength of the protruding post 44, thereby avoiding the following. On one hand, when the handle 32 is pulled up, the force of the handle 32 tilts the protruding post 44, so that the handle 32 cannot press down the blasting region to define the notch 1 for pressure relief. On the other hand, the protruding post 44 is damaged. The reinforcing part 451 can further improve the structural strength of the fixing portion 41, and can also disperse the force applied to the enclosing part 452 from the protruding post 44, thereby further improving the structural strength of the protruding post 44.

In this embodiment, the second reinforcing rib 45 is a protrusion protruding from the upper surface 401. In the actual manufacturing process, stamping is carried out on the lower surface 402 in a direction from the lower surface 402 towards the upper surface 401 to define a recess on the lower surface 402. The recess bottom wall of the recess protrudes from the upper surface 401, that is, the second reinforcing rib 45 is formed. The second reinforcing rib 45 is made by stamping, so that the damage to the explosion-proof-valve body 40 can be prevented, and the welding-induced thermal damage to the metallographic structure of the explosion-proof-valve body 40 can also be prevented, so that a decrease in the structural strength of the explosion-proof-valve body 40 and an increased in the internal stress of the explosion-proof-valve body 40 can be prevented, thereby further improving the structural consistency and structural strength of the explosion-proof valve 30.

Reference can be made to FIG. 6 and FIG. 7. The connecting ring portion 33 surrounds the outer peripheral surface of the explosion-proof-valve body 40 and is fixedly connected to the explosion-proof-valve body 40. The welding ring portion 31 surrounds the outer peripheral edge of the connecting ring portion 33 and is fixedly connected to the connecting ring portion 33. The strength of the connecting ring portion 33 is greater than the strength of the score portion 43 and less than the strength of the welding ring portion 31. In this embodiment, the connecting ring portion 33 is an annular groove defined between the explosion-proof-valve body 40 and the welding ring portion 31. The groove bottom wall of the annular groove is fixedly connected to the explosion-proof-valve body 40 and the welding ring portion 31 respectively. The thickness of the groove bottom wall of the annular groove is greater than the thickness of the score portion 43, which can ensure that when the explosion-proof valve 30 is subjected to the pressure from the inside of the energy storage apparatus 1000, the score portion 43 breaks first to complete the pressure relief.

The explosion-proof-valve body 40 is pulled away from the top cover 10, so that the connecting ring portion 33 breaks, the explosion-proof-valve body 40 can be separated from the welding ring portion 31. In this embodiment, by providing the connecting ring portion 33 and breaking the connecting ring portion 33, the explosion-proof-valve body 40 can be separated from the top cover 10, which is more convenient and simpler in structure. Meanwhile, by using the annular groove as the connecting ring portion 33, the strength can be reduced by reducing the thickness of the groove bottom wall of the groove.

Reference can be made to FIG. 8, which is a schematic structural view of a handle 32 of the explosion-proof valve 30 illustrated in FIG. 6.

The handle 32 includes a mounting portion 321, a connecting portion 322, a press-down portion 323, and a lifting portion 324. The press-down portion 323 and the lifting portion 324 are disposed opposite to each other and are respectively positioned at the opposite sides of the handle 32 in the length direction of the handle 32. The connecting portion 322 is connected between the press-down portion 323 and the lifting portion 324. A through groove is defined in the middle of the connecting portion 322. The mounting portion 321 defines mounting hole 325. The mounting portion 321 is disposed in the through groove, fixedly connected to the press-down portion 323, and spaced apart from the lifting portion 324. In this embodiment, the handle 32 is of a racetrack-shaped thin sheet structure. Both the press-down portion 323 and the lifting portion 324 are semi-circular. The connecting portion 322 includes two strip-shaped connecting sub-portions 322. The two connecting sub-portions 322 are parallel to and spaced apart from each other, and both are connected between the press-down portion 323 and the lifting portion 324. The through groove is cooperatively defined by the press-down portion 323, the lifting portion 324, and the two connecting sub-portions 322. In some other embodiments, the handle 32 may be of a square, oval, or other irregular-shaped structures.

The handle 32 is mounted on the upper surface 401 of the explosion-proof-valve body 40. The mounting portion 321 is sleeved on the outer periphery of the protruding post 44, and the mounting portion 321 can rotate around the protruding post 44. The mounting segment 441 of the protruding post 44 passes through the mounting hole 325. The limiting segment 442 is positioned at one side of the mounting portion 321 facing away from the upper surface 401. That is, the mounting portion 321 is positioned between the limiting segment 442 and the upper surface 401. The limiting segment 442 plays a limiting role on the mounting portion 321, thereby preventing the handle 32 from being detached from the explosion-proof-valve body 40 and improving the mounting stability between the handle 32 and the explosion-proof-valve body 40. The press-down portion 323 is disposed opposite to the rupture portion 42. The press-down portion 323 may be in contact with the rupture portion 42 or have a small gap with the rupture portion 42. The lifting portion 324 is positioned at one side of the protruding post 44 facing away from the rupture portion 42 and is disposed opposite to the second reinforcing rib 45. There is a gap between the lifting portion 324 and the upper surface 401, so that the handle 32 can be conveniently lifted from the lifting portion 324.

In this embodiment, the thickness of the connecting portion 322 is greater than each of the thickness of the press-down portion 323 and the thickness of the lifting portion 324. Therefore, the structural strength of the connecting portion 322 can be enhanced, thereby avoiding the following. When the lifting portion 324 of the handle 32 is lifted, if the structural strength of the connecting portion 322 is insufficient, the connecting portion 322 cannot drive the press-down portion 323 to press down the rupture portion 42, and the rupture portion 42 cannot be teared for pressure relief.

Reference can be made to FIG. 9, which is a schematic cross-sectional structural view of the end-cover assembly 100 of the energy storage apparatus 1000 illustrated in FIG. 4, taken in direction A-A.

The explosion-proof valve 30 is mounted in the explosion-proof hole 13 of the top cover 10. The lower surface 402 of the explosion-proof-valve body 40 is positioned facing towards the inside of the energy storage apparatus 1000 and is opposite to the vent hole 219 of the lower plastic member 20. The handle 32 is positioned at the outside of the energy storage apparatus 1000. The welding ring portion 31 is positioned in the recessed-platform portion 14, and is welded and fixed to the groove wall of the recessed-platform portion 14.

In this embodiment, the recessed-platform portion 14 defines a liquid-collecting groove 15 on a bottom surface of the recessed-platform portion 14. The liquid-collecting groove 15 is annular. An extending direction of the liquid-collecting groove 15 is consistent with an extending direction of the recessed-platform portion 14. The liquid-collecting groove 15 is defined around the recessed-platform portion 14. The liquid-collecting groove 15 is recessed from the bottom surface of the recessed-platform portion 14 towards the housing 200. When the explosion-proof valve 30 is welded and fixed to the bottom wall of the recessed-platform portion 14, the excess molten metal liquid flows into the liquid-collecting groove 15 along the groove sidewall and bottom wall of the recessed-platform portion 14, thereby avoiding the following. The excess metal liquid may solidify into fine metal particles, and the fine metal particles may fall into the inside of the energy storage apparatus 1000 to contact the electrode core 310 or other conductive elements, resulting in a short circuit inside the energy storage apparatus 1000.

The end-cover assembly 100 has a first state, a second state, a third state, and a fourth state.

As shown in FIG. 4 and FIG. 6, when the end-cover assembly 100 is in the first state, the score portion 43 is disposed around the rupture portion 42 and is fixedly connected between the rupture portion 42 and the hole wall of the gas release hole 403 to seal the gas release hole 403. Meanwhile, both the welding ring portion 31 and the connecting ring portion 33 are disposed around the explosion-proof-valve body 40. The connecting ring portion 33 is fixedly connected between the welding ring portion 31 and the explosion-proof-valve body 40. The explosion-proof-valve body 40, the connecting ring portion 33, and the welding ring portion 31 jointly cover the explosion-proof hole 13 to seal the explosion-proof hole 13. At this time, the energy storage apparatus 1000 is in a sealed state, the electrolyte is sealed inside the energy storage apparatus 1000, and the energy storage apparatus 1000 can supply power normally.

Reference can be made to FIG. 10, which is a partial schematic structural view of the end-cover assembly 100 illustrated in FIG. 4 when the end-cover assembly 100 is in a second state.

When the end-cover assembly 100 is in the first state, the press-down portion 323 is disposed opposite to the rupture portion 42. The handle 32 is rotated around the protruding post 44 so that the lifting portion 324 is disposed opposite to the rupture portion 42. When the internal pressure of the energy storage apparatus 1000 is too high, pressure is applied to the explosion-proof valve 30, so that the explosion-proof-valve body 40 breaks along the score portion 43, and the rupture portion 42 is flipped in a direction away from the top cover 10 to define the notch 1, thereby enabling the gas release hole 403 to communicate with the explosion-proof hole 13 and with the outside. Meanwhile, the rupture portion 42 abuts against the lifting portion 324, so that the lifting portion 324 is flipped in a direction away from the explosion-proof-valve body 40, and the connecting portion 322 is bent, thereby enabling the explosion-proof valve 30 to be in a burst state and the end-cover assembly 100 to be in the second state.

When the end-cover assembly 100 is in the second state, the internal pressure of the energy storage apparatus 1000 is released to the outside through the explosion-proof hole 13 and the gas release hole 403 to achieve pressure relief, thereby preventing the energy storage apparatus 1000 from exploding due to excessive internal pressure.

It can be understood that the lifting portion 324 is spaced apart from the mounting portion 321, so that the lifting portion 324 is easier to flip when subjected to force. In this embodiment, by rotating the handle 32 to make the lifting portion 324 positioned opposite to the rupture portion 42, when the explosion-proof valve 30 ruptures, the rupture portion 42 can drive the more easily bendable lifting portion 324 to flip, so that failure of pressure relief, caused by the handle 42 with excessive structural strength hindering the rupture portion 42 from being flipped upward, can be prevented, thereby ensuring that the explosion-proof valve 30 ruptures at the correct pressure threshold.

In an embodiment, when the end-cover assembly 100 is in the first state, the lifting portion 324 may be disposed opposite to the rupture portion 42, and the press-down portion 323 may be disposed opposite to the fixing portion 41.

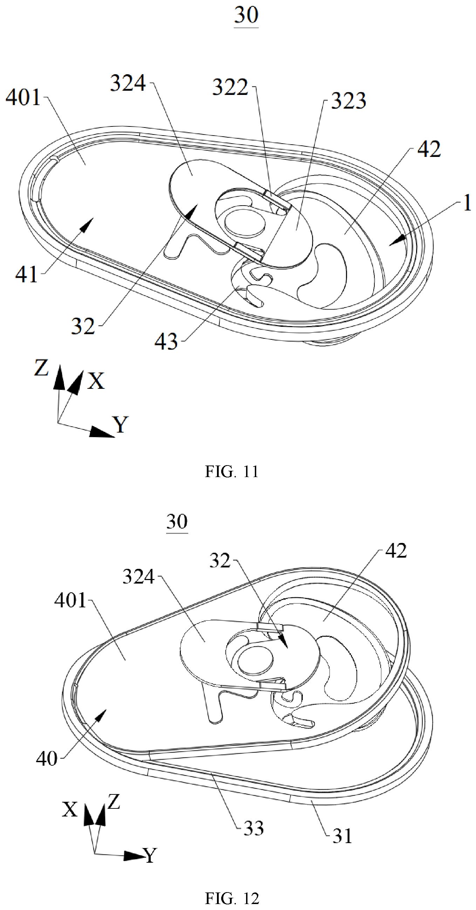

Reference can be made to FIG. 11 and FIG. 12, where FIG. 11 is a partial schematic structural view of the end-cover assembly illustrated in FIG. 4 when the end-cover assembly is in a third state, and FIG. 12 is a partial schematic structural view of the end-cover assembly illustrated in FIG. 4 when the end-cover assembly is in a fourth state.

When the energy storage apparatus 1000 needs to be replenished with electrolyte, on the basis that the end-cover assembly 100 is in the first state, the lifting portion 324 is lifted in a direction away from the upper surface 401 first. Then, the lifting portion 324 drives the press-down portion 323 through the connecting portion 322 to press down the rupture portion 42 in a direction towards the upper surface 401, causing the score portion 43 to break. Finally, the rupture portion 42 is flipped towards the inside of the energy storage apparatus 1000, and the explosion-proof-valve body 40 defines the notch 1. Therefore, the gas release hole 403 is in communication with the explosion-proof hole 13 and with the outside, so that the explosion-proof valve 30 is in a pressure relief state, and the end-cover assembly 100 is in the third state.

When the end-cover assembly 100 is in the third state, the high-pressure gas inside the energy storage apparatus 1000 is released to the outside through the explosion-proof hole 13 and the gas release hole 403 to achieve pressure relief.

When the end-cover assembly 100 is in the third state, the lifting portion 324 is pulled again in a direction away from the top cover 10. The lifting portion 324 exerts a force on the protruding post 44 in a direction away from the top cover 10 through the mounting portion 321 and exerts a force on the explosion-proof-valve body 40 in a direction away from the top cover 10, thereby causing the connecting ring portion 33 to break. The handle 32 and the explosion-proof-valve body 40 as a whole are pulled away from the top cover 10, and the welding ring portion 31 remains on the top cover 10, so that the end-cover assembly 100 is in the fourth state.

When the end-cover assembly 100 is in the fourth state, the connecting ring portion 33 breaks, the explosion-proof-valve body 40 is separated from the welding ring portion 31, and the explosion-proof hole 13 is in communication with the outside. The electrolyte can be injected into the energy storage apparatus 1000 through the explosion-proof hole 13, thereby realizing the supplementary filling of the electrolyte. After the electrolyte filling is completed, a second explosion-proof valve is mounted in the explosion-proof hole 13. A welding ring portion of the second explosion-proof valve is positioned in the recessed-platform portion 14, and is stacked with the welding ring portion 31 of the explosion-proof valve 30 in the thickness direction (Z direction) of the top cover 10. A welding body of the second explosion-proof valve is welded and fixed to the groove sidewall of the recessed-platform portion 14 and the welding ring portion 31 of the explosion-proof valve 30. The second explosion-proof valve is a new explosion-proof valve having the same structure as the explosion-proof valve 30.

By analogy, when the electrolyte needs to be supplemented and filled for the second time, the rupture portion 42 is first pressed down by the handle 32, so that the end-cover assembly 100 is in the third state, and the pressure of the energy storage apparatus 1000 is relieved. Then, the handle 32 is continuously lifted up, so that the end-cover assembly 100 is in the fourth state, the explosion-proof-valve body of the second explosion-proof valve is separated from the welding ring portion, and the explosion-proof hole 13 is in communication with the outside. Next, the electrolyte is injected into the energy storage apparatus 1000 through the explosion-proof hole 13, thereby realizing the second supplementary filling of the electrolyte. After the electrolyte is supplemented, a third explosion-proof valve is welded in the explosion-proof hole 13. A welding ring portion of the third explosion-proof valve, the welding ring portion of the second explosion-proof valve, and the welding ring portion 31 are stacked in the thickness direction of the top cover 10.

When the *M*-th supplementary filling of the electrolyte is required, the end-cover assembly 100 is first set to the third state so as to relieve the pressure of the energy storage apparatus 1000. Then, the end-cover assembly 100 is set to the fourth state, and the explosion-proof-valve body of the *M*-th explosion-proof valve is separated from the welding ring portion, so that the explosion-proof hole 13 is in communication with the outside. Next, the electrolyte is injected into the energy storage apparatus 1000 through the explosion-proof hole 13, thereby realizing the *M*-th supplementary filling of the electrolyte. After the electrolyte is supplemented, an (*M*+1)-th explosion-proof valve is welded in the explosion-proof hole 13. A welding ring portion of the (*M*+1)-th explosion-proof valve, a welding ring portion of the *M*-th explosion-proof valve, ... the welding portion of the second explosion-proof valve, and the welding ring portion 31 are stacked in the thickness direction of the top cover 10. Herein, *M* is a positive integer greater than or equal to 1.

It can be understood that after the *M*-th electrolyte supplementation is completed and the (*M*+1)-th explosion-proof valve is welded, there are *N* welding ring portions 31. In the thickness direction of the top cover 10, the *N* welding ring portions 31 are stacked and mounted in the recessed-platform portion 14. The multiple welding ring portions 31 include the *N*-th welding ring portion that is farthest from the groove bottom wall of the recessed-platform portion 14. When the end-cover assembly 100 is in the first state, the *N*-th welding ring portion and the connecting ring portion 33 both surround the fixing portion 41, and the connecting ring portion 33 is fixedly connected between the *N*-th welding ring portion and the fixing portion 41. Herein, *N* = *M* + 1, and *N* is a positive integer greater than or equal to 2.

In this embodiment, relieving the pressure before supplementing the electrolyte can prevent the pressure inside the energy storage apparatus 1000 from being too high and thereby avoid failure of the electrolyte injection. In addition, by providing the connecting ring portion 33 between the explosion-proof-valve body 40 and the welding ring portion 31, the explosion-proof-valve body 40 can be pulled away from the top cover 10 simply by pulling the handle 32, so that renewal and replacement of the explosion-proof valve 30 can be realized, thereby avoiding a decrease in the structural strength of the explosion-proof valve 30 due to corrosion caused by long-term contact with the electrolyte. Therefore, it can be ensured that the explosion-proof valve 30 mounted on the top cover 10 still has stable structural strength, so that the explosion-proof valve 30 ruptures at the preset explosion threshold, thereby ensuring the accuracy of the explosion threshold of the explosion-proof valve 30 and improving the safety performance of the energy storage apparatus 1000. Moreover, in this embodiment, after the explosion-proof-valve body 40 is pulled away from the top cover 10, the electrolyte is injected into the energy storage apparatus 1000 through the explosion-proof hole 13, thereby increasing the area for the electrolyte filling, improving the speed of the electrolyte filling, preventing contamination of the internal environment of the energy storage apparatus 1000 by foreign objects, and further improving the service life of the energy storage apparatus 1000.

As illustrated in FIG. 4 and FIG. 5, in an embodiment, an upper surface of the *N*-th welding ring portion is positioned on one side of the top surface 101 of the top cover 10 facing away from a top surface of the end-cover assembly 100. In other embodiments, the upper surface of the *N*-th welding ring portion is flush with the top surface 101 of the top cover 10. For example, when *N* is equal to 2, the depth of the recessed-platform portion 14 is greater than or equal to twice the thickness of the welding ring portion 31. It can be understood that after the energy storage apparatus 1000 is supplemented with electrolyte and a new explosion-proof valve is welded, *N* welding ring portions 31 are welded in the recessed-platform portion 14 in the depth direction of the recessed-platform portion 14. In this embodiment, by disposing the upper surface of the *N*-th welding ring portion on the side of the top surface 101 of the top cover 10 facing away from the top surface of the end-cover assembly 100, or by disposing the upper surface of the *N*-th welding ring portion to be flush with the top surface 101 of the top cover 10, after the new explosion-proof valve is welded, the upper surface 401 of the explosion-proof member 3 is slightly lower than the top surface 101 of the top cover 10, or flush with the top surface 101 of the top cover 10. Therefore, upward warping and peeling of a top patch on the top cover 10 can be avoided, thereby preventing exposure of the metal top cover 10 and avoiding a risk of short circuit.

The present disclosure further provides a production method for an energy storage apparatus 1000, including the following.
(1) An electrode assembly 300 and an end cover component are provided, and the electrode assembly 300 is connected to a terminal post of the end cover component.
(2) A housing 200 is provided, and the electrode assembly 300 is gathered and placed into the housing 200.
(3) The end cover component includes a top cover 10, and the top cover 10 is welded and sealed to an opening of the housing 200.
(4) The top cover 10 defines an explosion-proof hole 13, electrolyte is injected into the interior of the housing 200 through the explosion-proof hole 13, and formation is carried out.
(5) An explosion-proof valve 30 is provided. After the formation is completed, the explosion-proof valve 30 is placed into the explosion-proof hole 13 from top to bottom, and the explosion-proof valve 30 abuts against the recessed-platform portion 14 of the explosion-proof hole 13.
(6) A welding ring portion 31 of the explosion-proof valve 30 is welded to a hole wall of the explosion-proof hole 13 of the top cover 10 to form a fixed connection and sealing, thus obtaining the energy storage apparatus 1000.

At operation (1), the electrode assembly 300 is a wound electrode assembly. The end cover component includes a top cover 10, a first terminal-post 51 and a second terminal-post 52. The top cover 10 has a top surface 101 and a bottom surface 102 that are positioned facing away from each other. The top cover 10 defines a first terminal-post through-hole 11, a second terminal-post through-hole 12, and an explosion-proof hole 13 which are arranged at intervals in sequence. The explosion-proof hole 13 includes a body portion 131 and a recessed-platform portion 14. The recessed-platform portion 14 extends through the top surface 101. The body portion 131 is positioned at one side of the recessed-platform portion 14 away from the top surface 101 and is in communication with the recessed-platform portion 14. A hole wall surface of the recessed-platform portion 14 is disposed around a hole wall surface of the body portion 131 and is spaced apart from the hole wall surface of the body portion 131. The first terminal-post 51 is mounted in the first terminal-post through-hole 11 and is insulated from the top cover 10. The second terminal-post 52 is mounted in the second terminal-post through-hole 12 and is insulated from the top cover 10. The electrode assembly 300 is electrically connected to both the first terminal-post 51 and the second terminal-post 52.

At operation (4), "formation" refers to performing a first small-current charging on the manufactured lithium-ion battery, so as to form a passivation layer, namely a solid electrolyte interface (SEI) film, on a surface of a negative electrode of the battery.

At operation (5), "from top to bottom" means in the negative direction of the Z-axis, that is, a direction from the top cover 10 towards the electrode assembly 300.

At operation (6), after the explosion-proof valve 30 is mounted on the top cover 10, the explosion-proof valve 30, the top cover 10, and the end cover component together form an end-cover assembly 100. That is, the end-cover assembly 100 includes the end cover component and the explosion-proof valve 30. In this embodiment, before the explosion-proof valve 30 is mounted, the electrolyte can be injected into the housing 200 through the explosion-proof hole 13, thereby realizing the electrolyte filling. Compared with the separately designed electrolyte injection hole in the related art, the explosion-proof hole 13 is greater in size, and the electrolyte can be injected through the explosion-proof hole 13 at a faster speed, thereby improving the injection efficiency. Meanwhile, the electrolyte injection region is enlarged and the immersion effect of the electrode core 310 is improved. After the electrolyte injection is completed, the explosion-proof valve 30 is mounted on the top cover 10 to seal the explosion-proof hole 13, thereby realizing the sealing of the interior of the energy storage apparatus 1000. The end-cover assembly 100 provided in this embodiment eliminates the structure of the electrolyte injection hole and reduces the number of parts such as the sealant nail and the aluminum cover sheet for sealing the electrolyte injection hole, thereby simplifying the structures of the end-cover assembly 100 and the energy storage apparatus 1000, and further reducing the assembly procedures, thus lowering the production cost. Moreover, in this embodiment, the electrolyte is directly injected through the explosion-proof hole 13, and there is no need to separately define an electrolyte injection hole on the top cover 10 (or other positions of the energy storage apparatus 1000), so that deformation of the top cover caused by outward expansion under internal pressure of the energy storage apparatus 1000 due to the presence of the electrolyte injection hole can be avoided. Therefore, even when subjected to the pressure generated inside the energy storage apparatus 1000, the top cover 10 in the present disclosure can maintain the original mechanical structure thereof, thereby ensuring that the explosion-proof valve 30 can burst at the preset pressure threshold and improving the safety performance of the energy storage apparatus 1000.

The embodiments of the present disclosure are described in detail above. Specific examples are used in this specification to describe the principle and implementations of the present disclosure. The description of the embodiments is only used to help understand the method and core ideas of the present disclosure. Meanwhile, those of ordinary skill in the art may make modifications to the specific implementations and application scopes according to the idea of the present disclosure. In conclusion, the content of the specification shall not be construed as a limitation to the present disclosure.

## Claims

1. An end-cover assembly for sealing a housing of an energy storage apparatus, wherein the end-cover assembly comprises a top cover and an explosion-proof valve, the top cover defines an explosion-proof hole, the top cover has a top surface configured to be positioned facing away from the housing, the explosion-proof hole comprises a body portion and a recessed-platform portion, the recessed-platform portion extends through the top surface, and the body portion is positioned at one side of the recessed-platform portion positioned facing away from the top surface and is in communication with the recessed-platform portion; and a hole wall surface of the recessed-platform portion is disposed around and spaced apart from a hole wall surface of the body portion;
the explosion-proof valve comprises an explosion-proof-valve body, a welding ring portion, a connecting ring portion, and a handle, the welding ring portion and the connecting ring portion are both disposed around the explosion-proof-valve body, and the connecting ring portion is fixedly connected between the welding ring portion and the explosion-proof-valve body; and the welding ring portion is mounted at the recessed-platform portion and is fixedly connected to the hole wall surface of the recessed-platform portion;
the explosion-proof-valve body comprises a fixing portion, a rupture portion, and a score portion, the fixing portion defines a gas release hole, the gas release hole extends through the fixing portion in a thickness direction of the explosion-proof valve and is defined opposite to the explosion-proof hole in the thickness direction of the fixing portion, the rupture portion is disposed in the gas release hole, the rupture portion is fixedly connected to the fixing portion and rotatable relative to the fixing portion in the thickness direction of the fixing portion, and the score portion is disposed around the rupture portion and is fixedly connected between the rupture portion and a hole wall of the gas release hole; and a thickness of the score portion is less than a thickness of the connecting ring portion; and
the handle comprises a mounting portion, a press-down portion, and a lifting portion, the fixing portion is provided with a protruding post on an upper surface of the fixing portion, the mounting portion is mounted to the protruding post, the press-down portion is fixedly connected to the mounting portion and rotatable relative to the mounting portion in the thickness direction of the explosion-proof valve, and the lifting portion is fixedly connected to one end of the mounting portion and is configured to drive the press-down portion to rotate relative to the mounting portion in the thickness direction of the explosion-proof valve.

2. The end-cover assembly of claim 1, wherein the explosion-proof-valve body further comprises a reinforced connection portion, the reinforced connection portion is connected between opposite ends of the score portion, and the reinforced connection portion and the score portion are jointly disposed around the rupture portion, wherein a strength of the reinforced connection portion is greater than a strength of the score portion.

3. The end-cover assembly of claim 2, wherein the score portion is in the shape of a "Q".

4. The end-cover assembly of claim 1, wherein the rupture portion is provided with a first reinforcing rib, and the first reinforcing rib is spaced apart from the score portion.

5. The end-cover assembly of claim 1, wherein the handle further comprises a connecting portion, the connecting portion is fixedly connected between the press-down portion and the lifting portion, and a thickness of the connecting portion is greater than each of a thickness of the lifting portion and a thickness of the press-down portion.

6. The end-cover assembly of claim 1, wherein the protruding post comprises a limiting segment and a mounting segment, the mounting segment is fixed on the upper surface of the fixing portion, the limiting segment is fixed to one end of the mounting segment positioned facing away from the upper surface of the fixing portion, and an outer peripheral surface of the limiting segment exceeds an outer peripheral surface of the mounting segment; and the mounting portion is mounted to the protruding post and rotatable around the protruding post.

7. The end-cover assembly of claim 6, wherein the fixing portion is provided with a second reinforcing rib on the upper surface of the fixing portion, and the second reinforcing rib is positioned at one side of the protruding post positioned facing away from the rupture portion, extends in a circumferential direction of the protruding post, and is spaced apart from the protruding post.

8. The end-cover assembly of claim 1, wherein the welding ring portion is implemented as two welding ring portions, the two welding ring portions are stacked and mounted on the recessed-platform portion in the thickness direction of the top cover, and the two welding ring portions comprise a second welding ring portion positioned facing away from a bottom surface of the recessed-platform portion; and the second welding ring portion and the connecting ring portion are both disposed around the fixing portion, and the connecting ring portion is fixedly connected between the second welding ring portion and the fixing portion.

9. The end-cover assembly of claim 8, wherein an upper surface of the second welding ring portion is positioned at one side of the top surface of the top cover positioned facing away from a top surface of the end-cover assembly; or
the upper surface of the second welding ring portion is flush with the top surface of the top cover.

10. The end-cover assembly of claim 1, wherein the recessed-platform portion defines a liquid-collecting groove on a bottom surface of the recessed-platform portion, and the liquid-collecting groove is configured to be recessed from the bottom surface of the recessed-platform portion towards the housing, and is defined around the recessed-platform portion.

11. The end-cover assembly of claim 1, wherein the end-cover assembly further comprises a lower plastic member, the lower plastic member comprises a lower-plastic-member body and a protruding portion, and the protruding portion is fixedly connected to the lower-plastic-member body; the lower plastic member defines a vent hole, and in a thickness direction of the lower plastic member, the vent hole extends through the lower-plastic-member body and the protruding portion; and the lower plastic member is fixed on a rear surface of the top cover, and the vent hole is defined opposite to the explosion-proof hole.

12. The end-cover assembly of claim 1, wherein the explosion-proof hole is located in an edge region of the top cover.

13. The end-cover assembly of claim 1, wherein the end-cover assembly has a first state, a second state, a third state, and a fourth state;
when the end-cover assembly is in the first state, the score portion is disposed around the rupture portion and is fixedly connected between the rupture portion and the hole wall of the gas release hole, and the rupture portion is disposed opposite to the lifting portion or the press-down portion; and the explosion-proof-valve body, the connecting ring portion, and the welding ring portion jointly cover and seal the explosion-proof hole;
when the end-cover assembly is in the second state, the rupture portion is flipped upward relative to the fixing portion, the score portion is in a broken state, and the gas release hole is in communication with the explosion-proof hole;
when the end-cover assembly is in the third state, the lifting portion is lifted up, the rupture portion is disposed opposite to the press-down portion and is pressed down by the press-down portion, the rupture portion is flipped downward relative to the fixing portion, the score portion is in the broken state, and the gas release hole is in communication with the explosion-proof hole; and
when the end-cover assembly is in the fourth state, the rupture portion is flipped downward, the explosion-proof-valve body is separated from the welding ring portion, and the connecting ring portion is in a broken state.

14. An energy storage apparatus, comprising a housing, an electrode assembly, an electrolyte, and the end-cover assembly of any one of claims 1 to 13, wherein the housing has an opening and defines an accommodating cavity therein, the electrolyte and the electrode assembly are both positioned in the accommodating cavity, the electrode assembly is immersed in the electrolyte, and the end-cover assembly is mounted on the housing and covers the opening.

15. An electricity-consumption device, comprising the energy storage apparatus of claim 14, and the energy storage apparatus is configured to supply power to the electricity-consumption device.
